(19) Europäisches Patentamt
European Patent Office
Office européen des brevets

(11) Veröffentlichungsnummer: **0 202 434 B1**

(12) # EUROPÄISCHE PATENTSCHRIFT

(45) Veröffentlichungstag der Patentschrift: **27.03.91**

(51) Int. Cl.$^5$: **C08B 30/12**, C08L 3/02, //(C08L3/02,71:02)

(21) Anmeldenummer: **86104400.6**

(22) Anmeldetag: **01.04.86**

(54) **Verfahren zur Herstellung niedrigviskoser Stärkedispersionen.**

(30) Priorität: **23.05.85 DE 3518464**

(43) Veröffentlichungstag der Anmeldung: **26.11.86 Patentblatt 86/48**

(45) Bekanntmachung des Hinweises auf die Patenterteilung: **27.03.91 Patentblatt 91/13**

(84) Benannte Vertragsstaaten: **AT BE CH DE FR GB IT LI NL SE**

(56) Entgegenhaltungen:
**DE-A- 1 567 379**
**FR-A- 2 278 705**
**GB-A- 488 672**
**US-A- 2 698 255**
**US-A- 3 293 241**
**US-A- 3 313 640**

**CHEMICAL ABSTRACTS, Band 77, 1972, Seite 401, Zusammenfassung Nr. 33043j, Columbus, Ohio, US; Y. KIMURA et al.: "Interaction between starch and sucrose fatty acid esters. I. Effect of nonionic surfactants on the properties of potato starch gel", & NIPPON SHOKUHIN KOGYO GAKKAI-SHI 1971, 18(7), 333-9**

(73) Patentinhaber: **HÜLS AKTIENGESELLSCHAFT
Patentabteilung / PB 15 - Postfach 13 20
W-4370 Marl 1(DE)**

(72) Erfinder: **Heidel, Klaus, Dr.
Veilchenstrasse 10
W-4370 Marl(DE)**

EP 0 202 434 B1

Anmerkung: Innerhalb von neun Monaten nach der Bekanntmachung des Hinweises auf die Erteilung des europäischen Patents kann jedermann beim Europäischen Patentamt gegen das erteilte europäische Patent Einspruch einlegen. Der Einspruch ist schriftlich einzureichen und zu begründen. Er gilt erst als eingelegt, wenn die Einspruchsgebühr entrichtet worden ist (Art. 99(1) Europäisches Patentübereinkommen).

## Beschreibung

Die Erfindung betrifft ein Verfahen zur Herstellung von niedrigviskosen, wäßrigen Stärkedispersionen, die gelatinierte, aber nicht verkleisterte Stärkekörner enthalten.

Derartige Dispersionen werden vorzugsweise dann benötigt, wenn Stärke durch Veresterung, Veretherung, Oxidation oder durch eine andere Reaktion chemisch modifiziert werden soll.

Eine wichtige technologische Eigenschaft der Stärke ist ihr großes Quellvermögen. Allerdings folgt auf die Quellung im allgemeinen eine Verkleisterung zu einer Stärkepaste. Das kann durch Erwärmung, aber auch durch enzymatische Behandlung oder durch Zusatz von Alkali bei Raumtemperatur erreicht werden.

Bei der chemichen Modifizierung der Stärke stört die hohe Viskosität der Stärkepasten. Pasten mit Stärkekonzentrationen von 15 % sind teilweise nicht mehr rührfähig. Zur ausreichenden Vermischung mit den Reaktionspartnern ist man deshalb gezwungen, die Reaktion in relativ hoher Verdünnung durchzuführen.

Geht man von einer Suspension ungequollener Stärkekörner aus, so kann man die Reaktion bei einer hohen Stärkekonzentration und niedriger Viskosität durchführen. Um eine Verkleisterung sicher zu vermeiden, darf man dabei jedoch eine Temperatur von 50 °C nicht wesentlich überschreiten.

Allerdings verlaufen chemische Reaktionen in derartigen heterogenen Systemen oft unbefriedigend, da nur an der Oberfläche der festen Teile die Umsetzung stattfindet. So werden an fester Stärke nur geringe Substitutionsgrade erreicht.

Es gibt eine Reihe von Verfahren zur Herstellung dünnflüssiger Stärkepasten, bei denen jedoch ein erheblicher Eingriff in die Struktur der Stärke vorgenommen werden muß.

So wird durch teilweisen hydrolytischen Abbau mit Hilfe von Säuren eine dünnkochende Stärke (Ullmanns Encyklopädie der Technischen Chemie, Band 22 (1982), 192) erhalten, die beim Kochen in Wasser dünnflüssige Pasten liefert. Beim Abkühlen dicken die Pasten jedoch nach.

Zur Herstellung von Quellstärken werden wäßrige Stärkesuspensionen, meist auf Walzentrocknern, über die Verkleisterungstemperatur hinaus erwärmt und so desintegriert, verkleistert und getrocknet. Die Quellstärken, die auch als kaltwasserlösliche Stärken bezeichnet werden, verkleistern mit Wasser bereits bei Raumtemperatur. Deshalb sind sie für chemische Umsetzungen wenig geeignet.

Polyhydroxylverbindungen wie Glucose oder Saccharose entziehen der Stärke Wasser. So wird beim Erwärmen einer Stärkesuspension nach Zusatz von Zucker eine verlangsamte Gelatinierung und eine leicht erniedrigte Viskosität der Paste beobachtet (Encyclopedia of Polymer Science and Technology Vol. 12 (1970), 822).

Ähnliche Effekte werden auch von B. J. Oosten (Stärke 36 (1984), 18) angegeben: Durch Zusatz von Sorbit oder Glycerin wird die am Polarisationsmikroskop bestimmte Gelatinierungstemperatur um bis zu 14 °C erhöht. Diese Temperaturerhöhung ist unerwünscht, weil unterhalb der Gelatinierungstemperatur die Reaktionen von Stärke unvollständig ablaufen.

Als Gelatinierungstemperatur $T_{gel}$ soll im Rahmen dieser Erfindung die Temperatur angesehen werden, bei der 50 % der Stärkekörner ihre Doppelbrechung verloren haben (B. J. Oosten, Stärke 36 (1984), 18).

Das Verkleisterungsverhalten wird durch Messung der Viskosität als Funktion der Zeit und der Temperatur als sogenanntes Viskogramm erfaßt, wobei eine Stärkeaufschlämmung mit einer bestimmten Geschwindigkeit unter Rühren auf eine Temperatur von etwa 90 °C erwärmt wird, eine bestimmte Zeit (z. B. 30 min.) bei dieser Temperatur gehalten und dann die Stärkepaste mit bestimmter Geschwindigkeit abgekühlt wird.

Die Verkleisterungstemperatur $T_{vkl}$ ist dabei die Temperatur, bei der die Dispersion während des Aufheizens ein Viskositätsmaximum durchschreitet (vgl. Ullmanns Encyklopädie der Technischen Chemie, Band 22 (1982), 172).

Beim Abkühlen einer derartigen Probe steigt die Viskosität wieder an und erreicht ein zweites Maximum, das ein Maß für die Festigkeit des Stärkegels ist. Die Viskositätskurven haben für jede Stärkeart einen charakteristischen Verlauf. Beispielsweise führt die Verkleisterung von Kartoffelstärke zu einer relativ hohen Viskosität der Paste, die beim Erkalten wieder stark abfällt. Maisstärke hat eine geringere Viskositätsspitze.

Erhitzt man eine wäßrige Suspension nativer Stärke, so folgt auf die Gelatinierung sofort die Verkleiste rung zu einer Stärkepaste. Gelänge es, nach der erfolgten Gelatinierung die Verkleisterungstemperatur anzuheben, so ergäbe sich ein Temperaturbereich, in dem eine niedrigviskose (da unverkleisterte), gelatinierte Stärkedispersion vorläge, die für chemische Reaktionen gut geeignet wäre.

Nach GB 499 672 kann man Stärkekörner in Wasser in Gegenwart von Verkleisterungsinhibitoren erhitzen und dabei gelatinierte aber nicht verkleisterte Stärkedispersionen erhalten. Als Inhibitoren sind danach Natriumsalze von Fettsäuren oder natürlichen Ölen, sulfonierte natürliche Öle und sulfonierte

Alkohole geeignet. Die hier erhaltenen Produkte können einfacher als verkleisterte Stärke zu einem Pulver getrocknet werden.

In US 2 698 255 wird die Viskosität von Stärkekleistern durch einen Zusatz von geradkettigen, einwertigen Alkoholen mit 10 bis 14 Kohlenstoffatomen erniedrigt.

Gemäß FR 2 278 705 wird Stärke in Wasser zunächst auf 95 °C erhitzt, wobei ein Stärkekleister entsteht. Nach Zusatz von Dodecylethoxylat mit 4 Ethylenoxideinheiten wird der Kleister beim Abkühlen nicht hochviskos. Außerdem wird dadurch eine Verhärtung durch Retrogradation verhindert.

Nach O. Harbitz [Stärke 35 (9183), 198] kann durch Zusatz von Dedecansäure die Verkleisterungstemperatur um 2 °C erhöht werden. Dagegen wird durch Zusatz von Natriumdodecylsulfat, einem anionischen Tensid, die Verkleisterungstemperatur von Kartoffelstärke gesenkt.

Nach der japanischen Patentschrift 72-45 938 führen auch kationische und nichtionische Tenside, wie z. B. Polypropylenglykol-polyethylenglykolether, zu einer Senkung der Verkleisterungstemperatur. Sie beschleunigen demnach die Verkleisterung. In einem Beispiele wird dabei durch Dodecyl-Trimethylammoniumchlorid die Verkleisterungstemperatur um 7 °C gesenkt.

Der Fachmann, der sich die Aufgabe stellte, niedrigviskose Dispersionen von vorzugsweise nativer Stärke herzustellen, die erst bei erhöhter Temperatur verkleistern, erwartete daher, daß Tenside die Verkleisterungstemperatur erniedrigen und deshalb für seinen Zweck ungeeignete Zusätze sind.

Überraschenderweise wurde jetzt gefunden, daß man niedrigviskose Dispersionen gelatinierter Stärke erhalten kann, wenn man einseitig veretherte Polyoxyethylenglykole der Formel

$$R - (O - CH_2 - CH_2)_n - OH \qquad (I),$$

worin R ein Alkyl- oder Alkenylrest mit 6 bis 20 C-Atomen und n eine ganze Zahl von 3 bis 30 ist, zusetzt. Diese nichtionischen Tenside werden in Konzentrationen von 0,1 bis 10 Masse-%, bezogen auf die Stärketrockensubstanz, eingesetzt.

Für die erfindungsgemäßen Stärkedispersionen werden native und geringfügig abgebaute Stärken verwendet. Bei den geringfügig abgebauten Stärken eignen sich sowohl die säuremodifizierten als auch die oxidativ modifizierten Stärken, wie sie in Ullmanns Encyklopädie der Technischen Chemie, Band 22 (1982), 192, beschrieben sind. Vorzugsweise werden jedoch native Stärken wie Kartoffel-, Mais-, Weizen-, Reis- oder Tapiokastärke eingesetzt.

Gerade bei Dispersionen dieser hochmolekularen, nativen Stärken wird durch Zusatz der nichtionischen Tenside der Formel I eine starke viskositätsvermindernde Wirkung erzielt. Mit den geringfügig abgebauten Stärken, deren Viskosität niedriger ist, lassen sich nach Zusatz der nichtionischen Tenside der Formel I rührfähige, hochkonzentrierte Dispersionen herstellen.

In den Tensiden der Formel I ist R bevorzugt ein Alkylrest mit 8 bis 15 C-Atomen und n eine ganze Zahl von 4 bis 20. Ganz besonders werden Tenside der Formel I bevorzugt, in denen R ein Alkylrest mit 12 bis 14 C-Atomen und n eine ganze Zahl von 4 bis 20 ist.

Die nichtionischen Tenside der Formel I werden bevorzugt in Mengen von 1 bis 5 Masse-%, bezogen auf die Stärketrockensubstanz, den Dispersionen zugesetzt.

Üblicherweise werden die nichtionischen Tenside den kalten Suspensionen der Stärkekörner in Wasser zugesetzt.

Durch die erfindungsgemäßen Zusätze gelingt es, die Verkleisterungstemperatur zu erhöhen, während die Gelatinierungstemperatur unverändert bleibt.

Die nach Zugabe der Tenside der Formel I erhaltenen niedrigviskosen Dispersionen gelatinierter Stärke sind besonders gut für chemische Reaktionen geeignet. Aus diesen Dispersionen lassen sich die Stärke oder ihre Reaktionsprodukte durch einfache Zentrifugation oder durch Filtration und Trocknung isolieren. Die Schwierigkeiten der Aufarbeitung von Pasten und Lösungen werden dabei vermieden.

Durch den Zusatz der Verbindungen der Formel I werden außerdem Stärkefraktionierungen aus hochkonzentrierten Dispersionen bei erhöhten Temperaturen ermöglicht.

Es können bis zu 30 %ige, rührfähige Dispersionen gelatinierter, nativer Stärke hergestellt werden. Dabei sind 10 bis 30 %ige Dispersionen von besonderem technischen Interesse. Bei noch höherkonzentrierten Dispersionen werden die Stärkekörner nur noch teilgelatiniert.

Die folgenden Beispiele sollen die Erfindung erläutern.

In den Beispielen 1 bis 7 wird an verdünnten Stärkedispersionen die viskositätsvermindernde Wirkung der erfindungsgemäßen, nichtionischen Tenside der Formel I demonstriert. Die Ergebnisse lassen sich auch auf konzentrierte Dispersionen übertragen.

In den Beispielen 8 bis 20 werden an technisch interessanten, konzentrierten Stärkedispersionen die Einflüsse der nichtionischen Tenside auf die Gelatinierungstemperatur $T_{gel}$ und die Verkleisterungstemperatur $T_{vkl}$ dargelegt.

Die erfindungsgemäßen Beispiele werden mit Zahlen, die Vergleichsbeispiele mit Buchstaben gekennzeichnet.

Beispiele 1 - 4, Vergleichsbeispiele A - K

Eine Stärkesuspension aus

| | |
|---|---|
| 98 Teilen | vollentsalztem Wasser, |
| 2 Teilen | nativer Kartoffelstärke (Hersteller: Fa. Emslandstärke), |
| 0,04 Teilen | Tensid (vgl. Tabelle 1) |

wird unter Rühren mit einer Aufheizgeschwindigkeit von 3 °C/min von 45 auf 90 °C erwärmt. Die Temperatur wird 30 min bei 90 °C gehalten, danach wird mit einer Abkühlgeschwindigkeit von -3 °C/min auf 45 °C abgekühlt.

Während des gesamten Vorganges wird mit Hilfe eines Rotationsviskosimeters vom Typ RHEOMAT[R] 30 der Fa. Contraves die Viskosität der Dispersion verfolgt.

Die verwendeten Tenside sind in Tabelle 1 zusammengestellt. Der zeitliche Verlauf der Viskosität der Stärkedispersionen mit diesen Tensiden wird in den Diagrammen 1 bis 3 wiedergegeben.

Tabelle 1

| Beispiel | Tensid |
|---|---|
| A | - |
| B | $H - (O\ CH_2\ CH_2)_8 - OH$ |
| C | $H - (O\ CH_2\ CH_2)_{35} - OH$ |
| D | $H - (O\ CH_2\ CH_2)_{135} - OH$ |
| 1 | $C_{13}H_{27} - (O\ CH_2\ CH_2)_{19} - OH$, MARLIPAL$^R$ 1219, Fa. Hüls AG, D-4370 Marl |
| E | zu 88 Mol-% verseiftes Polyvinylacetat, POVAL$^R$ 220, Fa. Kuraray, Okayama, Japan |
| F | zu 71 Mol-% verseiftes Polyvinylacetat, MOWILITH$^R$ DM 5/290, Fa. Hoechst AG, D-6230 Frankfurt |
| G | $C_9H_{19}-C_6H_4-(OCH_2CH_2)_8-O-SO_3Na$, SERDET$^R$ DNK 15/35, Fa. Servo, Delden, Niederlande |
| 2 | $C_{17}H_{35} - (O\ CH_2\ CH_2)_{19} - OH$, MARLIPAL$^R$ SU |
| 3 | $C_{12}H_{25} - (O\ CH_2\ CH_2)_7 - OH$, MARLIPAL$^R$ MG |
| H | Sorbitan-polyethylenglykolether-dodecansäureester, TWEEN$^R$ 20, Fa. Atlas, Wilmington, Del., USA |
| I | Sorbitan-dodecansäureester, SPAN$^R$ 20, Fa. Atlas, Wilmington, Del., USA |
| J | Natriumdodecylbenzolsulfonat, MARLON$^R$ A 350, Fa. Hüls AG, D-4370 Marl |
| K | $C_{12}H_{25} - SO_3\ Na$ |
| 4 | $C_{12}H_{25} - (O\ CH_2\ CH_2)_4 - OH$, MARLIPAL$^R$ 124 |

Für Tabelle 1 sowie für die folgenden Tabellen 2 und 3 gilt, daß in den Formeln die Indices, die die Anzahl der Oxyethyleneinheiten angeben, jeweils Mittelwerte sind.

Beispiele 5 - 7, Vergleichsbeispiele L - 0

Mit einer Stärkesuspension aus

| | |
|---|---|
| 96 Teilen | vollentsalztem Wasser |
| 4 Teilen | nativer Maisstärke (Hersteller: Fa. Maizena) |
| 0,08 Teilen | Tensid (vgl. Tabelle 2) |

wird wie in den Beispielen 1 - 4 verfahren. Die verwendeten Tenside sind in Tabelle 2 zusammengestellt. Der Verlauf der Viskosität der Stärkedispersionen wird in den Diagrammen 4 und 5 veranschaulicht.

Tabelle 2

| Beispiel | Tensid |
|---|---|
| L | - |
| M | Natriumdodecylbenzolsulfonat |
| N | $C_{12}H_{25}$ - $SO_3$ Na |
| O | Sorbitan-polyethylenglykolether-dodecansäureester |
| 5 | $C_{12}H_{25}$ - (O $CH_2$ $CH_2)_4$ - OH |
| 6 | $C_{12}H_{25}$ - (O $CH_2$ $CH_2)_7$ - OH |
| 7 | $C_{12}H_{25}$ - (O $CH_2$ $CH_2)_{17}$ - OH, MARLIPAL$^R$ 1217 |

Beispiele 8 - 20 , Vergleichsbeispiele P - R

In einem 1 1-Rührkolben wird zu einer 10 %igen bzw. höherprozentigen Suspension einer nativen Stärke ein nichtionisches Tensid zugesetzt. Anschließend wird die Suspension unter Rühren mit einer Aufheizgeschwin digkeit von 3 °C/min von 45 auf 95 °C erwärmt. An Proben wird unter einem Polarisationsmikroskop $T_{gel}$ bestimmt.

Die Bestimmung von $T_{vkl}$ erfolgt mit guter Annäherung an den tatsächlichen Wert dadurch, daß man den Beginn und das Ende der Verkleisterung bestimmt und daraus den Temperaturmittelwert berechnet. Der Beginn der Verkleisterung ist dadurch gekennzeichnet, daß die Viskosität stark zunimmt und die Rührertrombe verschwindet. Am Ende der Verkleisterung ist eine homogene Masse entstanden, und der Rührer bleibt stehen oder rührt, ohne außerhalb seiner Reichweite die Masse zu bewegen.

Tabelle 3

| Beispiel | % Stärke bez. auf Dispersion | Stärke | % Tensid bez. auf Stärke | Tensid | $T_{gel}$ °C | $T_{vkl}$ °C |
|---|---|---|---|---|---|---|
| P | 10 | native Maisstärke | - | $C_{12}H_{25}-(OCH_2CH_2)_7-OH$ | 66 | 80 |
| 8 | 10 | | 2 | | 66 | 90 |
| 9 | 10 | | 4 | | 66 | >95 |
| 10 | 10 | | 10 | | 66 | >95 |
| Q | 10 | native Kartoffelstärke | - | $C_{12}H_{25}(OCH_2CH_2)_4-OH$ | 65 | 75 |
| 11 | 10 | | 2 | | 64 | 85 |
| 12 | 10 | | 4 | | 65 | 91 |
| 13 | 10 | | 10 | | 65 | >95 |
| R | 10 | native Weizenstärke | - | $C_{12}H_{25}-(OCH_2CH_2)_{17}-OH$ | 59 | 75 |
| 14 | 10 | | 2 | | 59 | 92 |
| 15 | 10 | | 4 | | 59 | >95 |
| 16 | 10 | | 10 | | 60 | >95 |
| 17 | 20 | native Maisstärke | 5 | $C_{12}H_{25}-(OCH_2CH_2)_{17}-OH$ | 67 | >95 |
| 18 | 20 | | 10 | | 67 | >95 |
| 19 | 30 | | 5 | | 67 | >95 |
| 20 | 30 | | 10 | | 67 | >95 |

## Ansprüche

1. Verfahren zur Herstellung gelatinierter, unverkleisterter, wäßriger Stärkedispersionen durch Zusatz von Stärke und Polyether in Wasser und anschließendes Erwärmen auf eine Temperatur im Bereich von der Gelatinierungstemperatur bis zu 95 °C und Homogenisieren,
dadurch gekennzeichnet,
daß, bezogen auf die Stärke, 0,1 bis 10 Masse-% eines Polyethers der Formel

$$R - (O - CH_2 - CH_2)_n - OH \qquad (I),$$

worin R ein Alkyl- oder Alkenylrest mit 6 bis 20 C-Atomen und n eine ganze Zahl von 3 bis 30 ist, zugesetzt werden.

2. Verfahren nach Anspruch 1, dadurch gekennzeichnet, daß, bezogen auf die Stärke, 0,5 bis 5 Masse-% eines Polyethers der Formel I zugesetzt werden.

3. Verfahren nach den Ansprüchen 1 und 2, dadurch gekennzeichnet, daß in Formel I R ein Alkylrest mit 8 bis 15 C-Atomen und n eine ganze Zahl von 4 bis 20 ist.

4. Verfahren nach Anspruch 3, dadurch gekennzeichnet, daß R ein Alkylrest mit 12 bis 14 C-Atomen ist.

5. Verfahren nach den Ansprüchen 1 bis 4, dadurch gekennzeichnet, daß eine native Stärke eingesetzt wird.

6. Verfahren nach den Ansprüchen 1 bis 5, dadurch gekennzeichnet, daß man Dispersionen mit 10 bis 30 Masse-% Stärketrockensubstanz herstellt.

## Claims

1. Process for the preparation of a gelatinized, non-pasty, aqueous starch dispersion by adding starch and polyether to water and then heating the mixture to a temperature in the range from the gelatinization temperature up to 95 °C and homogenizing it, characterized in that, relative to the starch, 0.1 to 10% by weight of a polyether of the formula

   $R - (O - CH_2 - CH_2)_n - OH$ (I), in which R is an alkyl or alkenyl radical of 6 to 20 C atoms and n is an integer from 3 to 30, are added.

2. Process according to claim 1, characterized in that, relative to the starch, 0.5 to 5% by weight of a polyether of the formula I are added.

3. Process according to either of claims 1 and 2, characterized in that in formula I R is an alkyl radical of 8 to 15 C atoms and n is an integer from 4 to 20.

4. Process according to claim 3, characterized in that R is an alkyl radical of 12 to 14 C atoms.

5. Process according to any of claims 1 to 4, characterized in that a native starch is used.

6. Process according to claims 1 to 5, characterized in that dispersions with 10 to 30% by weight of starch dry matter are prepared.

## Revendications

1. Procédé de préparation de dispersions aqueuses d'amidon, gélatinisées mais non transformées en empois, par addition d'amidon et de polyéthers dans de l'eau et chauffage subséquent à une température comprise dans le domaine de la température de gélatinisation jusqu'à 95 °C, et par homogénéisation, caractérisé par le fait que, relativement a l'amidon, on ajoute de 0,1 à 10 % en masse d'un polyéther de formule

$$R - (O - CH_2 - CH_2)_n - OH \qquad (I),$$

dans laquelle R est un radical alkyle ou alcényle comportant de 6 à 20 atomes de carbone et n est un nombre entier d'une valeur de 3 à 30.

2. Procédé selon la revendication 1, caractérisé par le fait que l'on ajoute, relativement à l'amidon, de 0,5 à 5 % en masse d'un polyéther de la formule (I).

3. Procédé selon les revendications 1 et 2, caractérisé par la fait que, dans la formule (I), R est un radical alkyle comportant de 8 à 15 atomes de carbone et n est un nombre entier d'une valeur de 4 à 20.

4. Procédé selon la revendication 3, caractérisé par le fait que R est un radical alkyle comportant de 12 à 14 atomes de carbone.

5. Procédé selon les revendications 1 à 4, caractérisé par le fait que l'on utilise un amidon natif.

6. Procédé selon les revendications 1 à 5, caractérisé par le fait que l'on prépare des dispersions avec 10 à 30 % en masse de matière sèche d'amidon.

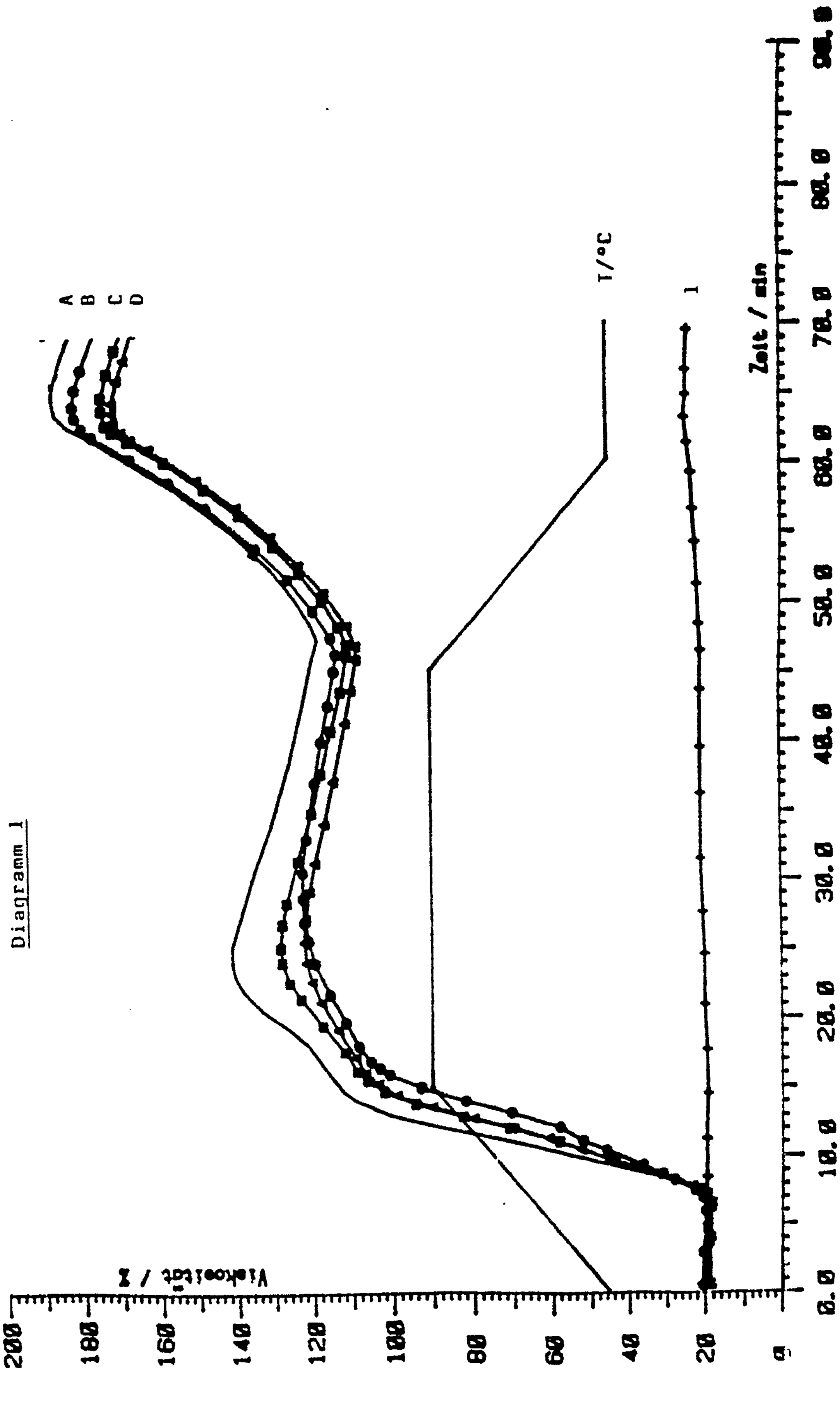
Diagramm 1
Viskosität / %
Zeit / min
T/°C
A
B
C
D
1
0.0
10.0
20.0
30.0
40.0
50.0
60.0
70.0
80.0
20
40
60
80
100
120
140
160
180
200

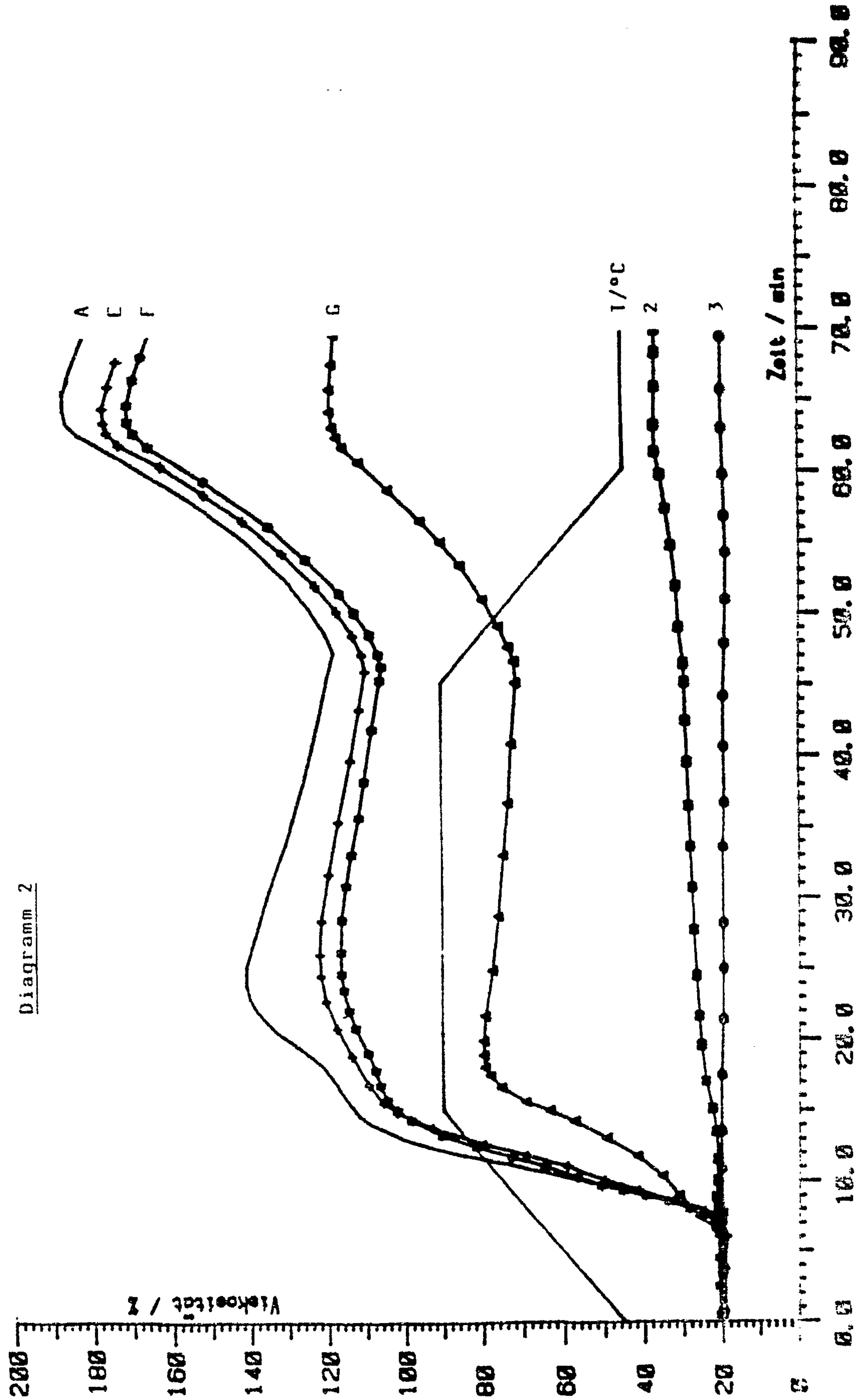
Diagramm 2
Viskosität / %
Zeit / min
A
E
F
G
T/°C
2
3
200
180
160
140
120
100
80
60
40
20
0.0
10.0
20.0
30.0
40.0
50.0
60.0
70.0
80.0
90.0

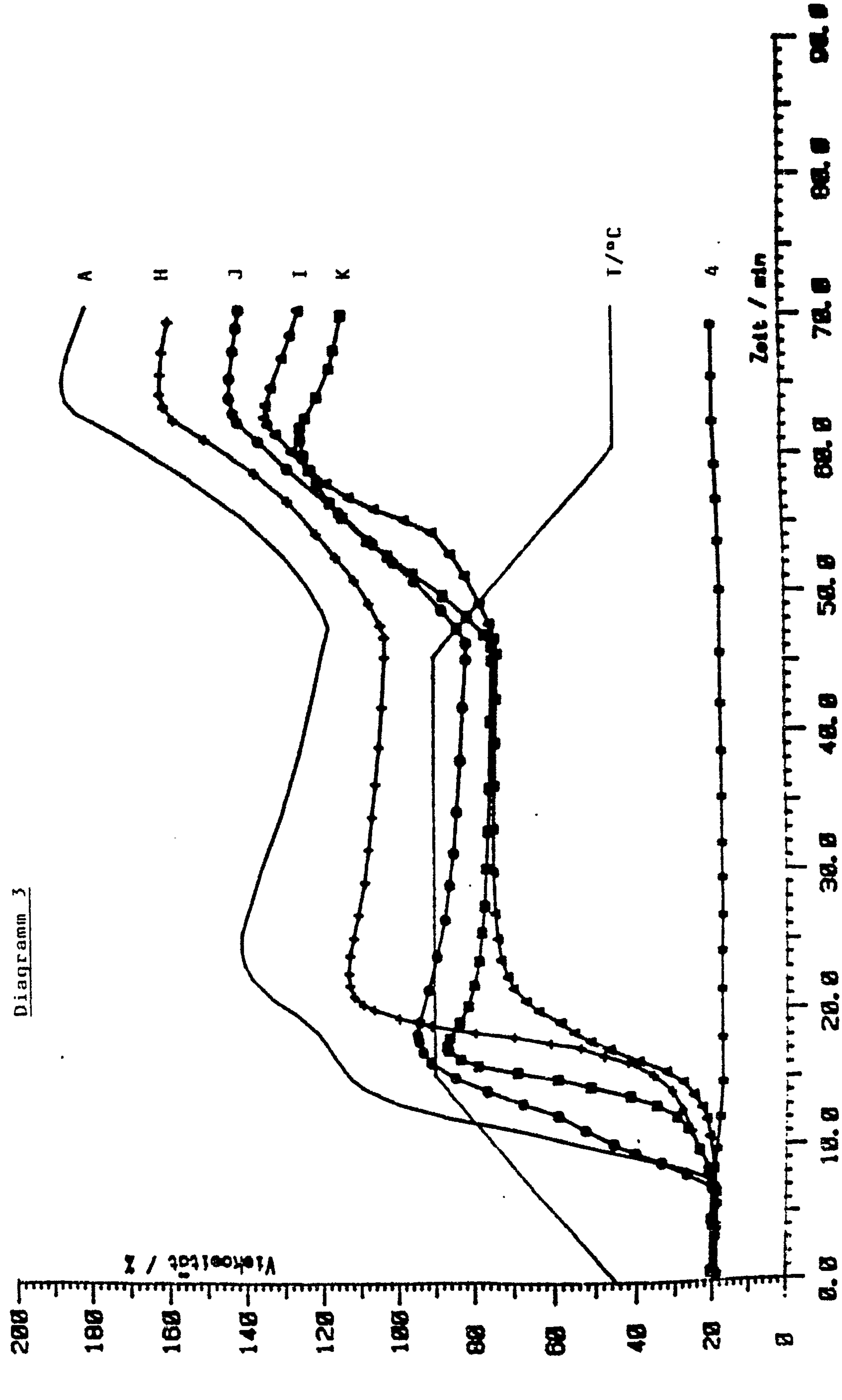
Diagramm 3
Viskosität / %
Zeit / min
T/°C
A
H
J
I
K
4
0
20
40
60
80
100
120
140
160
180
200
0.0
10.0
20.0
30.0
40.0
50.0
60.0
70.0
80.0
90.0

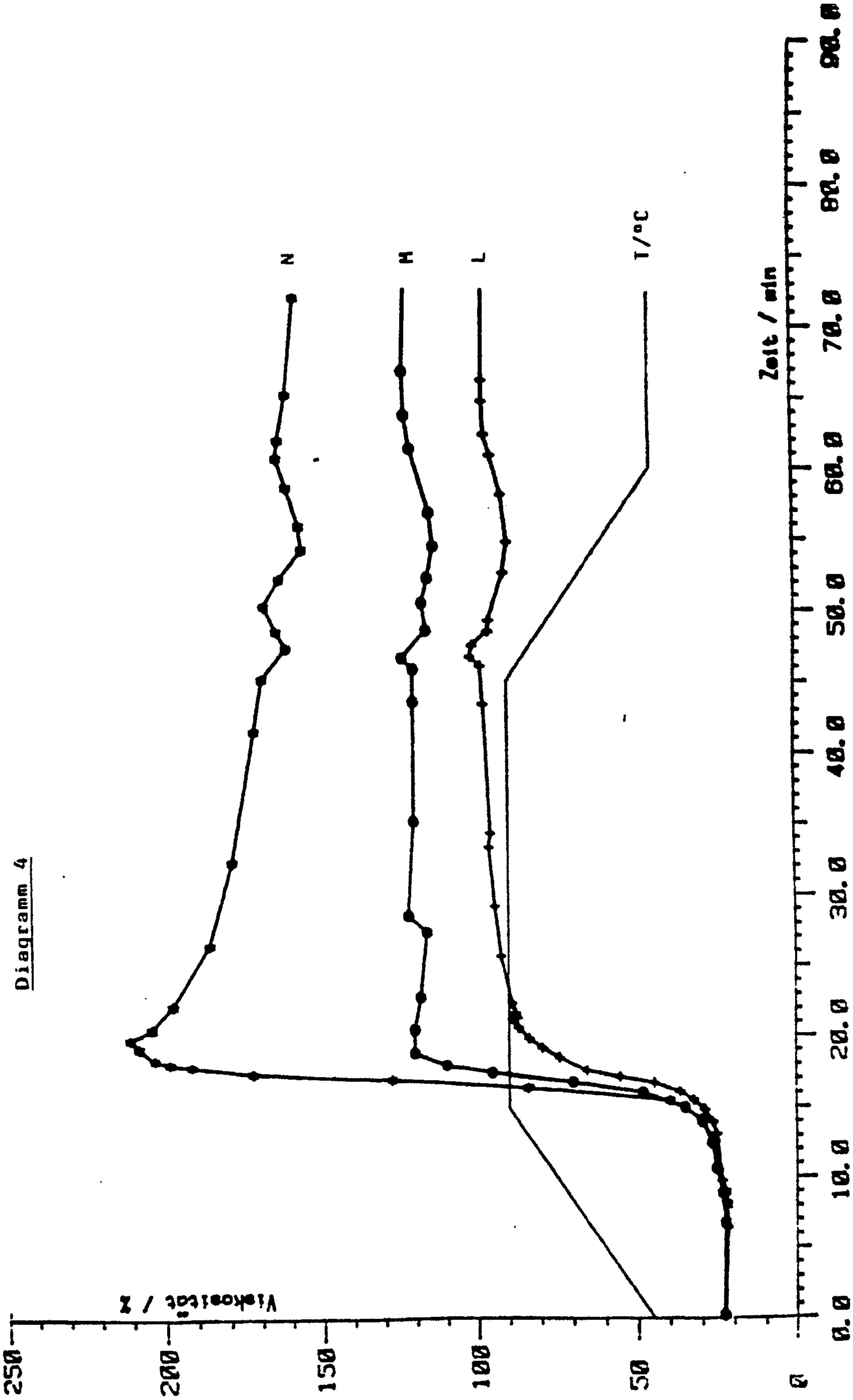
Diagramm 4
Viskosität / %
250
200
150
100
50
0
Zeit / min
0.0
10.0
20.0
30.0
40.0
50.0
60.0
70.0
80.0
90.0
N
M
L
T/°C

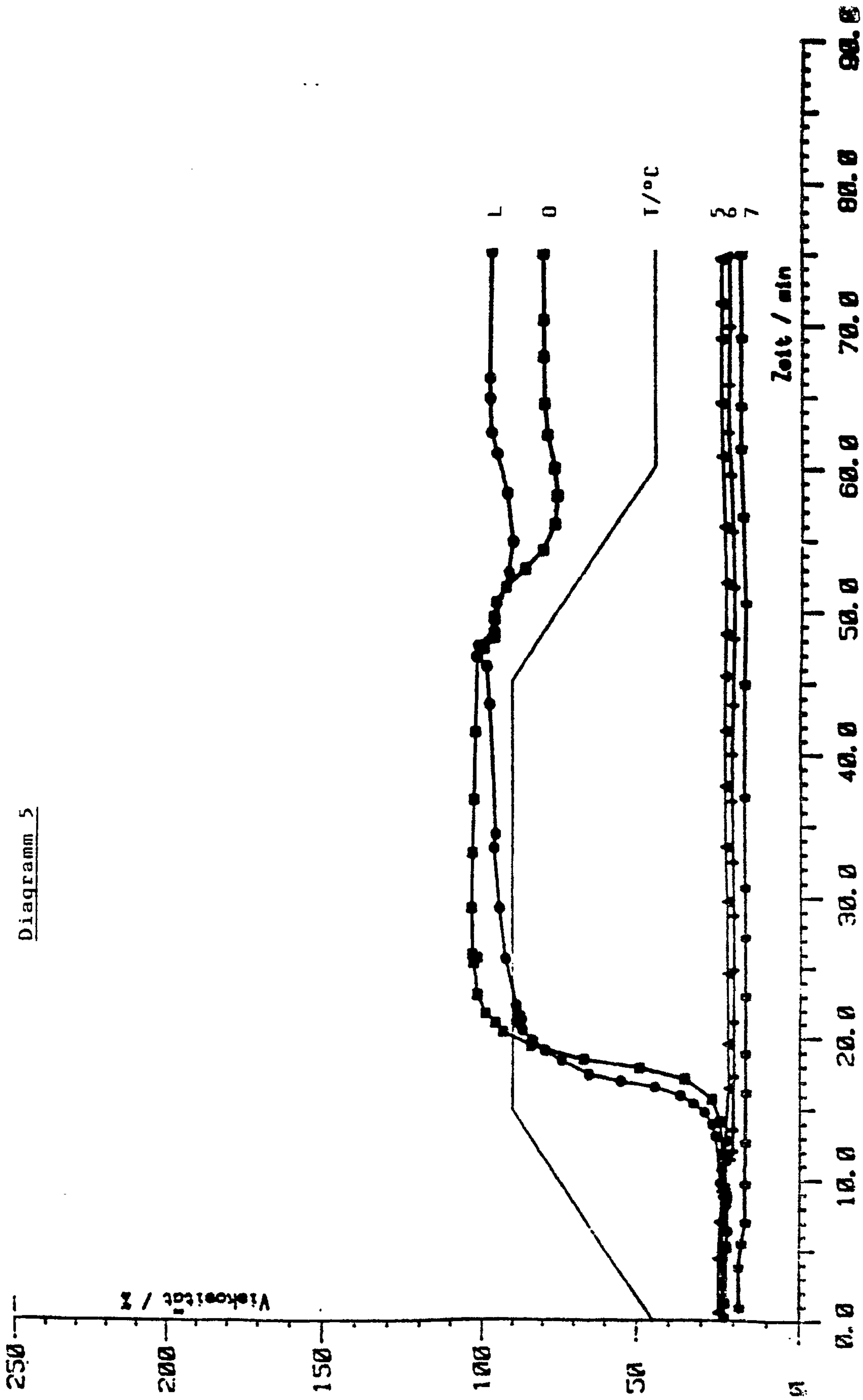
Diagramm 5
Viskosität / %
250
200
150
100
50
0
Zeit / min
0.0
10.0
20.0
30.0
40.0
50.0
60.0
70.0
80.0
90.0
L
O
T/°C
5
6
7